# EUROPÄISCHE PATENTSCHRIFT

(11) **EP 2 195 363 B1**
(45) Veröffentlichungstag und Bekanntmachung des Hinweises auf die Patenterteilung: **30.08.2017**
(21) Anmeldenummer: 08804848.3
(22) Anmeldetag: 29.09.2008
(51) Int. Cl.: C08G 18/72, C08G 18/76, C08G 18/79, C08G 18/63, C08G 18/66, C08G 18/40, C08G 18/12

(54) **NIEDERDICHTE POLYURETHANSCHAUMSTOFFE UND DEREN VERWENDUNG IN SCHUHSOHLEN**
LOW-DENSITY POLYURETHANE FOAMS AND USE THEREOF IN SHOE SOLES
MOUSSE DE POLYURÉTHANE BASSE DENSITÉ ET SON UTILISATION DANS DES SEMELLES DE CHAUSSURE

(30) Priorität: 02.10.2007 EP 07117767
(43) Veröffentlichungstag der Anmeldung: 16.06.2010
(73) Patentinhaber: BASF SE, 67056 Ludwigshafen am Rhein (DE)
(72) Erfinder: KAMM, Andre, 49448 Lemförde (DE); SCHÜTTE, Markus, 49080 Osnabrück (DE); HASCHKE, Holger, 49419 Wagenfeld (DE); SPITILLI, Tony, I-10147 Torino (IT)
(74) Vertreter: BASF IP Association
(86) Internationale Anmeldenummer: PCT/EP2008/062985
(87) Internationale Veröffentlichungsnummer: WO 2009/047149

(56) Entgegenhaltungen:
- EP-A- 1 225 199
- EP-A- 1 726 612
- EP-B- 1 042 384
- WO-A-00/18817
- WO-A1-2010/063531
- DE-A1- 19 506 671
- DE-A1- 19 854 837
- US-A- 5 389 693
- ZHANG ET AL: "Role of zinc chloride and complexing agents in highly active double metal cyanide catalysts for ring-opening polymerization of propylene oxide", APPLIED CATALYSIS A: GENERAL, ELSEVIER SCIENCE, AMSTERDAM, NL, vol. 325, no. 1, 10 May 2007 (2007-05-10), pages 91-98, XP022069685, ISSN: 0926-860X, DOI: 10.1016/J.APCATA.2007.03.014
- Acclaim 2200
- Acclaim 4200
- Acclaim Polyether

## Beschreibung

Die vorliegende Erfindung betrifft ein Verfahren zur Herstellung eines Polyurethanformkörpers mit einer Dichte von 150 bis 350 g/L bei dem man a) Polyisocyanatprepolymere, erhältlich aus einer Polyisocyanatkomponente (a-1), Polyol (a-2), wobei als Polyol (a-2) ausschließlich Polypropylenoxid mit einem zahlenmittleren Molekulargewicht von 1000 bis 7000g/mol eingesetzt wird und Kettenverlängerer (a-3), b) Polyetherpolyole mit einer mittleren Funktionalität von größer 2,0, hergestellt aus einem oder mehreren Alkylenoxiden unter Zusatz mindestens eines Startermoleküls durch anionische Polymerisation mit Alkalihydroxyden oder kationische Polymerisation mit Lewis-Säuren als Katalysatoren, c) Polymerpolyetherpolyole, d) Kettenverlängerer, e) Katalysatorsystem enthaltend organische Metallverbindungen auf Basis von Bismut in Kombination mit stark basischen Aminen, f) Treibmittel, enthaltend Wasser, und gegebenenfalls g) sonstige Hilfsmittel und/oder Zusatzstoffe zu einer Reaktionsmischung vermischt und in einer Form zum Polyurethanformkörper aushärtet. Weiter betrifft die gegenwärtige Erfindung Polyurethanformkörper, erhältlich nach einem erfindungsgemäßen Verfahren, und Schuhsohlen, enthaltend erfindungsgemäße Polyurethanformkörper.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Elastische Polyurethanformkörper mit kompakter Oberfläche und zelligem Kern, sogenannte Polyurethan-Weichintegralschaumstoffe, sind seit langem bekannt und werden in unterschiedlichen Bereichen angewendet. Eine typische Verwendung ist die als Schuhsohle, zum Beispiel für Straßenschuhe, Sportschuhe, Sandalen und Stiefel. Insbesondere können Polyurethan-Weichintegralschaumstoffe bei der Herstellung von Außensohlen, Zwischensohlen, Einlegesohlen und Formsohlen eingesetzt werden.

Aus Komfort- und Kostengründen wird eine Verringerung der Dichten der Polyurethanformteile angestrebt. Dabei müssen Polyurethan-Weichintegralschaumstoffe geliefert werden, die trotz geringer Dichten ausreichende mechanische Eigenschaften, wie Härte und Elastizität, aber auch gute Verarbeitungseigenschaften, wie eine hohe Dimensionsstabilität und geringe Fehlerhäufigkeit, aufweisen. Üblicherweise wird die Abnahme dieser Eigenschaften durch einen erhöhten Wasseranteil in der Formulierung zur Herstellung dieser Formteile, der umweltschädliche Treibmittel ersetzt, zusätzlich verstärkt. Aus diesem Grunde konnten sich Schuhsohlen aus Polyurethan (PUR) mit Dichten kleiner 300 g/L, beispielsweise für Sportschuhe, bislang nicht gegenüber konkurrierenden Materialien, wie z.B. Poly(ethylen-co-vinylacetat) (EVA) durchsetzen.

Für Polyurethanformkörper auf Basis von Polyestern sind Schuhsohlen mit einer Dichte von kleiner 400 g/L bekannt. So offenbart WO 2005/116101 Polyurethan-Weichintegralschaumstoffe auf Basis von Polyestern mit einer Dichte von kleiner 400 g/L, erhältlich unter Verwendung einer Kombination von Polyesterpolyol und Polymerpolyesterol. Solche Polyurethanformkörper können gemäß WO 2005/116101 auch als Schuhsohlen verwendet werden.

Polyesterbasierten Polyurethan-Weichintegralschaumstoffe zeigen allerdings ein verbesserungswürdiges Alterungsverhalten unter feuchtwarmen Bedingungen. Es ist bekannt, dass Polyurethan-Weichintegralschaumstoffe auf Basis von Polyethern ein verbessertes Hydrolysealterungsverhalten zeigen.

WO 91/17197 offenbart, dass die Nutzung von Polyolen auf Basis von Poly(oxy-tetramethylen) vorteilhaft für Herstellung PU-Schaumstoffen mit Dichten von 100 bis 1000 g/L ist. EP 1042384 lehrt, dass die Nutzung von Poly(oxytetramethylen) und Polymerpolyolen die Verarbeitungseigenschaften deutlich verbessert. So zeigt EP 1042384, dass bei Dichten von 150 bis 500 g/L keinerlei Hautablöser oder Probleme mit der Dimensionsstabilität auftreten. Der Nachteil dieser Methode ist der deutlich höhere Preis von Poly(oxytetramethylen) im Vergleich zu konventionellen Polyolen, die über KOH-katalysierte Reaktion hergestellt werden.

In WO97/44374 wird die Verwendung von mittels DMC-Katalyse hergestellten Polyetherpolyolen (nachfolgend auch als DMC-Polyetherpolyole bezeichnet) zur Herstellung von Polyurethan-Weichintegralschaumstoffen mit Dichten von 200 bis 350 g/L beschrieben. Diese Polyurethan-Weichintegralschaumstoffe können auch als Schuhsohlen verwendet werden. Der Nachteil der DMC-Polyetherpolyole ist, dass diese herstellungsbedingt nur sekundäre OH-Gruppen aufweisen und aufgrund der geringen Reaktivität ausschließlich im Prepolymeren Anwendung finden können. Polyurethanformkörper mit geringer Dichte und guten mechanischen Eigenschaften können so nicht erhalten werden.

WO 00/18817 erläutert die Herstellung von niederdichten Polyurethanformkörpern unter Verwendung von DMC-Polyetherpolyolen mit Ethylenoxid-Endcap, wodurch Polyole mit primären OH-Gruppen erhalten werden. Diese Polyole können sowohl in der Polyolkomponente als auch im Prepolymeren eingesetzt werden. Der Nachteil dieser Polyole ist, dass DMC-Polyole mit einem EO-Endcap über einen aufwendigen Hybridprozess hergestellt werden.

EP 582 385 offenbart Polyurethan-Weichintegralschaumstoffe mit einer Dichte von 200 bis 350 g/L und Wasser als alleinigem Treibmittel. Die Herstellung erfolgt ausgehend von einem Polyetherpolyol und einem Isocyanatprepolymer auf Basis von organischen Polyisocyanaten und Polyetherpolyolen. Nachteilig an Polyurethan-Weichintegralschaumstoffen nach EP 582385 ist, dass diese schlechte mechanische Eigenschaften, wie eine nur eingeschränkte Härte und eine geringe Reißfestigkeit, sowie schlechte Verarbeitungseigenschaften und eine schlechte Hautqualität aufweisen.

Aufgabe der vorliegenden Erfindung war es daher, ein kostengünstiges Verfahren zur Herstellung von hydrolysestabilen Polyurethan-Weichintegralschaumstoffe mit einer Dichte von 150 bis 350 g/L und hervorragenden mechanischen Eigenschaften sowie einer sehr guten Verarbeitbarkeit zu liefern.

Die erfindungsgemäße Aufgabe wird gelöst durch ein Verfahren zur Herstellung von Polyurethanformkörpern mit einer Dichte von 150 bis 350 g/L, bei dem man a) Polyisocyanatprepolymere, erhältlich aus einer Polyisocyanatkomponente (a-1), Polyol (a-2), wobei als Polyol (a-2) ausschließlich Polypropylenoxid miot einem zahlenmittleren Molekulargewicht von 1000 bis 7000 g/mol eingesetzt wird und Kettenverlängerer (a-3), b) Polyetherpolyole mit einer mittleren Funktionalität von größer 2,0, hergestellt aus einem oder mehreren Alkylenoxiden unter Zusatz mindestens eines Startermoleküls durch anionische Polymerisation mit Alkalihydroxyden oder kationische Polymerisation mit Lewis-Säuren als Katalysatoren, c) Polymerpolyetherpolyole, d) Kettenverlängerer, e) Katalysatorsystem, enthaltend organische Metallverbindungen auf Basis von Bismut in Kombination mit stark basischen Aminen, f) Treibmittel, enthaltend Wasser, und gegebenenfalls g) sonstige Hilfsmittel und/oder Zusatzstoffe zu einer Reaktionsmischung vermischt und diese in einer Form aushärtet.

Weiter wird die erfindungsgemäße Aufgabe gelöst durch Polyurethan-Weichintegralschaumstoffe, herstellbar nach einem erfindungsgemäßen Verfahren.

Als Polyurethan-Weichintegralschaumstoffen werden Polyurethan-Schaumstoffe nach DIN 7726 mit zelligem Kern und kompakter Oberfläche verstanden, wobei die Randzone, bedingt durch den Formgebungsprozess, eine höhere Dichte als der Kern aufweist. Die über den Kern und die Randzone gemittelte Gesamtrohdichte liegt dabei 150 bis 350 g/L, bevorzugt von 150 bis 300 g/L und insbesondere von 200 bis 300 g/L. In einer bevorzugten Ausführungsform betrifft die Erfindung Polyurethan-Weichintegralschaumstoffe auf Basis von Polyurethanen mit einer Asker C Härte im Bereich von 20-90 , bevorzugt von 35 bis 70 Asker C, insbesondere 45 bis 60 Asker C, gemessen nach ASTM D 2240. Weiterhin weisen die erfindungsgemäßen Polyurethan-Weichintegralschaumstoffen bevorzugt Zugfestigkeiten von 0,5 bis 10 N/mm², bevorzugt von 1 bis 5 N/mm², gemessen nach DIN 53504 auf. Ferner weisen die erfindungsgemäßen Polyurethan-Weichintegralschaumstoffen bevorzugt eine Dehnung von 100 bis 800 %, bevorzugt von 180 bis 500, gemessen nach DIN 53504 auf. Ferner weisen die erfindungsgemäßen Polyurethan-Weichintegralschaumstoffen bevorzugt eine Rückprallelastizität nach DIN 53 512 von 10 bis 60 % auf. Schließlich weisen die erfindungsgemäßen Polyurethan-Weichintegralschaumstoffen bevorzugt eine Weiterreißfestigkeit von 0,5 bis 10 N/mm, bevorzugt von 1,0 bis 4 N/mm, gemessen nach ASTM D3574, auf.

Die zur Herstellung der Polyurethan-Weichintegralschaumstoffe eingesetzten Polyisocyanatprepolymere a) sind erhältlich aus einer Polyisocyanatkomponente (a-1), Polyol (a-2), enthaltend Polypropylen, und Kettenverlängerer (a-3). Diese Polyisocyanatprepolymere a) sind erhältlich, indem Polyisocyanate (a-1), beispielsweise bei Temperaturen von 30 bis 100 °C, bevorzugt bei etwa 80 °C, mit Polyolen (a-2), enthaltend Polypropylenoxid, und Kettenverlängerer (a-3) zum Prepolymer umgesetzt werden. Das Verhältnis von Isocyanatgruppen zu Isocyanat reaktiven Gruppen wird hierbei so gewählt, dass der NCO-Gehalt des Prepolymeren 8 bis 28 Gew.-%, vorzugsweise 14 bis 26 Gew.-%, besonders bevorzugt 16 bis 23 Gew.-% und insbesondere 16 bis 20 Gew.-% beträgt. Um Nebenreaktionen durch Luftsauerstoff auszuschließen, kann die Umsetzung unter Inertgas, vorzugsweise Stickstoff, durchgeführt werden.

Als Polyisocyanate (a-1) können die aus dem Stand der Technik bekannten aliphatischen, cycloaliphatischen und aromatischen zwei- oder mehrwertigen Isocyanate, sowie beliebige Mischungen daraus, eingesetzt werden. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Toluylendiisocyanat (TDI), Naphthalindiisocyanat (NDI) oder Mischungen daraus.

Bevorzugt wird 4,4'-MDI und/oder HDI verwendet. Das besonders bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge vo Isocyanatmolekülen mit einer Funktionalität von größer 2 sollte 5 Gew.-% der Gesamtmasse des eingesetzten Isocyanats nicht überschreiten.

Als Polyol (a-2) werden Polyole auf Etherbasis, enthaltend 100 Gew.-% Polypropylenoxid, jeweils bezogen auf das Gesamtgewicht des Polyols (a-2), verwendet. Die mittlere Funktionalität der eingesetzten Polyole (a-2) beträgt vorzugsweise 1,7 bis 3,5, besonders bevorzugt 1,9 bis 2,8 und das zahlenmittlere Molekulargewicht 1000 bis 7000 g/mol und insbesondere 1750 bis 4500 g/mol.

Die Herstellung der Polyole (a-2) erfolgt zumeist durch die allgemein bekannte basisch katalysierte Anlagerung von an H-funktionelle, insbesondere OH-funktionelle Startsubstanzen. Als Startsubstanzen dienen beispielsweise Wasser, Ethylenglykol oder Propylenglykol beziehungsweise Glycerin oder Trimethylolpropan.

Als Kettenverlängerungsmittel (a-3) für das Prepolymer sind zwei- oder dreiwertige Alkohole, bevorzugt verzweigte zwei- oder dreiwertige Alkohole mit einem Molekulargewicht von weniger als 450 g/mol, besonders bevorzugt weniger als 400 g/mol, insbesondere weniger als 300 g/mol geeignet. Der Anteil des Kettenverlängerungsmittels am Gesamtgewicht der Polyisocyanatprepolymere (a) beträgt vorzugsweise 0,1 bis 10 Gew.-%, besonders bevorzugt 0,5 bis 5 Gew.-% und insbesondere 2 bis 4 Gew.-%. Bevorzugt enthalten Kettenverlängerer (a-3) Tripropylenglycol. Besonders bevorzugt werden als Kettenverlängerer (a-3) Dipropylenglykol und/oder Tripropylenglykol sowie Addukte von Dipropylenglykol und/oder Tripropylenglykol mit Alkylenoxiden, bevorzugt Propylenoxid, oder Mischungen daraus eingesetzt. Insbesondere wird als Kettenverlängerungsmittel (a-3) ausschließlich Tripropylenglycol eingesetzt.

Als Polyetherpolyole (b) werden Polyetherpolyole mit einer mittleren Funktionalität von größer 2,0 eingesetzt. Geeignete Polyetherpolyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat, oder Kaliumisopropylat oder durch kationische Polymerisation mit Lewis-Säuren, wie Antimonpentachlorid und Borfluorid-Etherat als Katalysatoren und unter Zusatz mindestens eines Startermoleküls, das vorzugsweise 2 bis 4 reaktive Wasserstoffatome gebunden enthält, aus einem oder mehreren Alkylenoxiden mit vorzugsweise 2 bis 4 Kohlenstoffatomen im Alkylenrest hergestellt werden.

Geeignete Alkylenoxide sind beispielsweise 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermolekül kommen beispielsweise Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen- und Polyoxypropylen-polyoxyethylenpolyole, besitzen eine mittlere Funktionalität von vorzugsweise 2,01 bis 3,50, besonders bevorzugt 2,25 bis 3,10 und ganz besonders bevorzugt von 2,4 bis 2,8. Insbesondere werden Polyetherpolyole eingesetzt, die ausschließlich ausgehend von trifunktionellen Startermolekülen erhalten wurden. Die Molekulargewichte der Polyetherpolyole b) betragen vorzugsweise 1000 bis 10000, besonders bevorzugt 1800 bis 8000 und insbesondere 2400 bis 6000 g/mol.

Vorzugsweise werden Polyetherpolyole auf Basis von Propylenoxyd, die endständig gebundene Ethylenoxideinheiten aufweisen, eingesetzt. Dabei beträgt der Gehalt an endständig gebundenen Etylenoxideinheiten vorzugsweise 10 bis 25 Gew.-%, bezogen auf das Gesamtgewicht des Polyetherpolyols b).

Als Polymerpolyetherpolyole c) werden Polyetherpolyole eingesetzt, die üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweisen. Diese Polymerpolyetherpolyole sind bekannt und kommerziell erhältlich und werden üblicherweise durch radikalische Polymerisation von olefinisch ungesättigten Monomeren, vorzugsweise Acrylniltril, Styrol, sowie gegebenenfalls weiterer Monomerer, eines Makromers und gegebenenfalls eines Moderators unter Einsatz eines Radikal-Initiators, meist Azo-oder Peroxidverbindungen, in einem Polyetherol als kontinuierliche Phase hergestellt. Das Polyetherol, das die kontinuierliche Phase darstellt, wird häufig als Trägerpolyol bezeichnet. Beispielhaft für die Herstellung von Polymerpolyolen sind hier die Patentschriften US 4568705, US 5830944, EP 163188, EP 365986, EP 439755, EP 664306, EP 622384, EP 894812 und WO 00/59971 zu nennen.

Üblicherweise ist das eine in situ Polymerisation von Acrylnitril, Styrol oder vorzugsweise Mischungen aus Styrol und Acrylnitril, z.B. im Gewichtsverhältnis 90:10 bis 10:90 vorzugsweise 70:30 bis 30:70.

Als Trägerpolyole kommen alle poyetherbasierten Polyole, vorzugsweise solche wie unter b) beschrieben, in Frage. Makromere, auch als Stabilisatoren bezeichnet, sind lineare oder verzweigte Polyetherole mit Molekulargewichten größer oder gleich 1000 g/mol, die mindestens eine endständige, reaktionsfähige olefinische ungesättigte Gruppe enthalten. Die ethylenisch ungesättigte Gruppe kann über Reaktion mit Carbonsäure-Anhydriden, wie Maleinsäureanhydrid, Fumarsäure, Acrylat- und Methacrylat-derivaten sowie Isocyanat-Derivaten, wie 3-Isopropenyl-1,1-dimethylbenzyl-Isocyanat, Isocyanato-ethylmethacrylat, an ein bereits bestehendes Polyol angefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind in den Dokumenten US 4390645, US 5364906, EP 0461800, US 4997857, US 5358984, US 5990232, WO 01/04178 und US 6013731 beschrieben.

Während der radikalischen Polymerisation werden die Makromere mit in die Copolymerkette eingebaut. Dadurch bilden sich Blockcopolymere mit einem Polyether- und einem Poly-Acrylnitril-Styrol-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-%, bevorzugt 3 bis 10 Gew.-%, bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropanol, Ethanol, Methanol, Cyclohexan, Toluol, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styren. Bevorzugt wird Alkylmercaptan verwendet.

Zur Initiierung der radikalischen Polymersisation werden üblicherweise Peroxid- oder Azo-Verbindungen, wie Dibenzoyl-peroxide, Lauroylperoxide, t-Amylperoxy-2-ethyl-hexanoate, Di-t-butylperoxide, Diisopropyl peroxide carbonate, t-Butyl peroxy-2-ethyl-hexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitril), 2,2'-Azobisisobutyronitril (AIBN), Dimethyl-2,2'-azobisisobutyrat, 2,2'-Azobis(2-methylbutyronitril) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Polymerpolyole werden in kontinuierlichen Verfahren, unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Vorzugsweise ist der Anteil an Polymerpoyletherpolyol (c) größer als 5 Gew.-%, bezogen auf das Gesamtgewicht der Komponenten (b) und (c). Die Polymerpolyetherpolyole können, bezogen auf das Gesamtgewicht der Komponenten (b) und (c), beispielsweise in einer Menge von 7 bis 90 Gew.-%, oder von 11 bis 80 Gew.-% enthalten sein.

Als Kettenverlängerungsmittel und/oder Vernetzungsmittel (d) werden Substanzen mit einem Molekulargewicht von kleiner 500 g/mol, bevorzugt von 60 bis 400 g/mol eingesetzt, wobei Kettenverlängerer zwei gegenüber Isocyanaten reaktive Wasserstoffatome und Vernetzungsmittel drei gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie 1,3-Propandiol, 1,10-Decandiol, 1,2-, 1,3-, 1,4-Dihydroxycyclohexan, Diethylenglykol, Dipropylenglykol und vorzugsweise Monoethylenglykol,1,4-Butandiol, 1,6-Hexandiol und Bis-(2-hydroxyethyl)-hydrochinon, Triole, wie 1,2,4-, 1,3,5-Trihydroxy-cyclohexan, Glycerin, Diethanolamin, Triethanolamin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol oder 1,4-Butandiol eingesetzt. Dabei beträgt der Anteil von entweder Monoethylenglccol oder 1,4-Butandiol in einer weiteren bevorzugten Ausführungsform mindestens 70 Gew.-%, bezogen auf das Gesamtgewicht von Kettenverlängerungsmittel und/oder Vernetzungsmittel (d). Insbesondere wird eine Mischung aus Monoethylenglycol und 1,4-Butandiol eingesetzt, wobei das Gewichtsverhältnis von Monoethylenglccol und 1,4-Butandiol vorzugsweise 1:4 bis 4:1 ist.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b), (c) und (d), zum Einsatz.

Als Katalysatoren (e) zur Herstellung der Polyurethanschaumstoffe werden bevorzugt Verbindungen verwendet, welche die Reaktion der reaktive H-Atome enthaltenden Verbindungen der Komponente (b) und gegebenenfalls (c) mit den Polyisocyanatprepolymeren (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin. Ebenso kommen in Betracht organische Metallverbindungen, wie Bismutcarboxylate, wie Bismut(III)-neodecanoat, Bismut-2-ethylhexanoat und Bismut-octanoat oder Mischungen davon. Die organischen Metallverbindungen können in Kombination mit stark basischen Aminen eingesetzt werden. Es werden Zinnfreie Katalysatorsysteme eingesetzt, wie Katalysatorsysteme, enthaltend organische Metallverbindungen auf Basis von Bismuth in Kombination mit stark basischen Aminen. Solche zinnfreien Katalysatorsysteme sind beispielsweise in EP 1720927 beschrieben.

Vorzugsweise verwendet werden 0,001 bis 5 Gew.-%, insbesondere 0,05 bis 2 Gew.-% Katalysator bzw. Katalysatorkombination, bezogen auf das Gewicht der Komponenten (b), (c) und (d).

Ferner sind bei der Herstellung von Polyurethan-Weichintegralschaumstoffen Treibmittel (f) zugegen. Diese Treibmittel enthalten Wasser. Als Treibmittel (f) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird Wasser als alleiniges Treibmittel eingesetzt.

Der Gehalt an Wasser beträgt in einer bevorzugten Ausführungsform von 0,1 bis 2 Gew.-%, bevorzugt 0,2 bis 1,8 Gew.-%, besonders bevorzugt 0,3 bis 1,5 Gew.-%, insbesondere 0,4 bis 1,2 Gew.-%, bezogen auf das Gesamtgewicht der Komponenten (b) bis (f).

In einer weiteren bevorzugten Ausführungsform werden der Umsetzung der Komponenten (a) bis (f) und gegebenenfalls (g) als zusätzliches Treibmittel Mikrohohlkugeln, die physikalisches Treibmittel enthalten, zugegeben. Die Mikrohohlkugeln können auch im Gemisch mit den vorstehend genannten zusätzlichen chemischen Treibmitteln und/oder physikalischen Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im allgemeinen in einer Menge von 0,5 bis 5 Gew.-%, bezogen auf das Gesamtgewicht der Komponenten (b) bis (f), zugesetzt.

Der Reaktionsmischung zur Herstellung der Polyurethanschäume können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponenten (b) bis (d), eingesetzt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (b) bis (d), zugegeben, wobei jedoch der Gehalt an Matten, Vliesen und Geweben aus natürlichen und synthetischen Fasern Werte bis 80 Gew.-% erreichen kann.

Die Komponenten (a) bis (g) werden zur Herstellung eines erfindungsgemäßen Verbundmaterials in solchen Mengen miteinander vermischt, dass das Äquivalenzverhältnis von NCO-Gruppen der Polyisocyanatprepolymere (a) zur Summe der reaktiven Wasserstoffatome der Komponenten (b), (c), (d) und (f) 1 : 0,8 bis 1 : 1,25, vorzugsweise 1 : 0,9 bis 1 : 1,15 beträgt. Im Rahmen der Erfindung wird die Mischung der Komponenten (a) bis (f) und gegebenenfalls (g) bei Reaktionsumsätzen kleiner 90 %, bezogen auf die Isocyanatgruppen, als Reaktionsmischung bezeichnet.

Die erfindungsgemäßen Polyurethan-Weichintegralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff', Carl-Hanser-Verlag, München, Wien, 1975, oder im "Kunststoffhandbuch", Band 7, Polyurethane, 3. Auflage, 1993, Kapitel 7.

Die Ausgangskomponenten (a) bis (f) und gegebenenfalls (g) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Vorzugsweise wird dabei im zwei-Komponentenverfahren gearbeitet. Dazu wird im Vorfeld eine Polyolkomponente, umfassend die Komponenten (b) bis (f) und gegebenenfalls (g), hergestellt, welche die A-Komponente bildet. Diese wird dann bei der Herstellung der Reaktionsmischung mit der Isocyanatkomponente, der sogenannten B-Komponente, enthaltend die Isocyanatprepolymere (a), vermischt. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C.

Die Menge der in das Formwerkzeug eingebrachten Reaktionsmischung wird so bemessen, dass die erhaltenen Formkörper aus Integralschaumstoffen eine Dichte von 150 bis 350 g/L, insbesondere von 150 bis 300 g/L aufweisen. Die Verdichtungsgrade zur Herstellung der Polyurethan-Weichintegralschaumstoffe liegen dabei vorzugsweise im Bereich von 1,1 bis 8,5, besonders bevorzugt im Bereich von 1,8 bis 7,0.

Erfindungsgemäße Weichintegralschaumstoffe zeichnen sich durch sehr gute mechanische Eigenschaften, wie insbesondere Härte von 55 Asker C und Reißfestigkeit aus. Weiter lassen sich die erfindungsgemäßen Polyurethan-Weichintegralschaumstoffe problemlos herstellen und zeigen eine hervorragende Dimensionsstabilität und keine Oberflächendefekte, wie Hautablöser oder Lunker.

Im Folgenden wird die Erfindung anhand von Beispielen verdeutlicht.

### Beispiele:

**Verwendete Einsatzstoffe:**

| | |
|---|---|
| Lupranat MES: | 4,4'-MDI, kommerziell erhältlich von Elastogran GmbH |
| Lupranat MM103 : | carbodiimid modifiziertes 4,4'- MDI |

Polyol 1: Polyetherol auf Basis von Propylenglycol und Proplyenoxid mit einer OH-Zahl von 55 mg KOH/g und einer Viskosität von 325 mPas bei 25°C.
Polyol 2: Polyetherol auf Basis von Propylenglycol, Propylenoxid und Ethylenoxid mit einer OH-Zahl von 29 mg KOH/g und einer Viskosität 775 mPas bei 25°C.
Polyol 3: Polyetherol auf Basis von Glycerin, Propylenoxid und Ethylenoxid mit einer OH-Zahl von 27 mg KOH/g und einer Viskosität von 5270 mPas bei 25°C.
Polyol 4: Lupranol 4800 der Firma Elastogran GmbH; Polymerpolyetherol mit einem Feststoffgehalt von 45 Gew.-% und einer OH-Zahl von 20 mg KOH/g.

| | |
|---|---|
| KV1: | Kettenverlängerer Monoethylenglycol |
| KV2: | Kettenverlängerer 1,4-Butandiol |
| KV3: | Tripropylengylcol |
| | |
| KAT1: | Dabco gelöst in MEG |
| KAT2: | N,N,N'N'-Tetramethyl-2,2'-oxybis(ethylamin) gelöst in Dipropylenglycol |
| KAT3: | Metallkatalysator auf Basis von Bismuth |
| KAT4: | Metallkatalysator auf Basis von Zinn |
| KAT5: | Katalysator auf Basis von Imidazolderivaten |
| KAT6: | Einbaubarer Katalysator auf Basis von Imidazolderivaten |
| | |
| FRG: | freies Raumgewicht |
| | |
| FTD: | Formteildichte |

Die eingesetzten Isocyanatprepolymere ISO A und ISO B wurden gemäß Tabelle 1 hergestellt.

**Tabelle 1**

| | ISO A | ISO B |
|---|---|---|
| Lupranat MES | 61,40 | 56,90 |
| Lupranat MM103 | 2,00 | 2,00 |
| Polyol 1 | 32,50 | 41,10 |
| KV3 | 4,00 | 0,00 |

Der NCO-Gehalt von ISO A und ISO B beträgt jeweils 18,0%

Die Herstellung der Polyurethanformkörper erfolgte durch Vermischen der Polyisocyanatprepolymere ISO A oder ISO B mit einer Polyolkomponente. Die Zusammensetzungen der eingesetzten Polyolkomponenten sowie das jeweils eingesetzte Isocyanatprepolymere und der Isocyanatindex sind in Tabelle 2 angegeben. Dabei steht V1 bis V4 für Vergleichsversuche 1 bis 4 und B1 für das nicht erfindungsgemäße Beispiel 1 und B2 und B3 für die erfindungsgemäßen Beispiele 2 und 3.

**Tabelle 2**

| | V1 | V2 | V3 | V4 | B1 | B2 | B3 |
|---|---|---|---|---|---|---|---|
| Polyol 2 | 85,46 | 42,76 | | | | | |
| Polyol 3 | | 42,75 | 85,57 | 55,11 | 52,42 | 52,45 | 59,01 |
| Polyol 4 | | | | 30,81 | 30,00 | 30,74 | 28,87 |
| KV1 | 8,56 | 8,53 | 8,49 | 8,39 | 8,18 | 8,37 | 7,04 |
| KV2 | 2,67 | 2,66 | 2,65 | 1,95 | 3,19 | 1,95 | 2,26 |
| Wasser | 1,49 | 1,48 | 1,48 | 1,13 | 1,40 | 1,18 | 1,10 |
| KAT1 | 1,39 | 1,38 | 1,38 | 1,30 | 1,00 | 1,30 | 1,10 |
| KAT2 | 0,39 | 0,39 | 0,39 | 0,32 | 0,41 | 0,33 | 0,51 |
| KAT3 | | | | 0,32 | | 0,32 | 0,06 |
| KAT4 | 0,05 | 0,05 | 0,05 | | 0,05 | | |
| KAT5 | | | | 0,34 | 0,40 | 0,34 | |
| KAT6 | | | | 0,26 | 0,27 | 0,26 | |
| Schwarzpasten | | | | | 2,92 | | |
| | | | | | | | |
| Isocyanat | ISO A | ISO A | ISO A | ISO B | ISO A | ISO A | ISO A |
| Index | 96 | 96 | 96 | 100 | 98 | 100 | 98 |

Tabelle 3 gibt Aufschluss über die Eigenschaften der PU-Formkörper gemäß den Vergleichsbeispielen V1 bis V4 und den erfindungsgemäßen Beispielen B1 bis B3:

**Tabelle 3**

| | V1 | V2 | V3 | V4 | B1 | B2 | B3 |
|---|---|---|---|---|---|---|---|
| Startzeit [s] | 11 | 11 | 10 | 6 | 7 | 7 | 6 |
| Steigzeit [s] | 40 | 39 | 34 | 22 | 40 | 28 | 34 |
| FRG [g/L] | 118 | 119 | 119 | 170 | 111 | 158 | 137 |
| FTD [g/L] | 250 | 250 | 250 | 250 | 250 | 250 | 250 |
| Härte [Asker C] | 53 | 52 | 54 | 53 | 55 | 58 | 55 |
| Schrumpf [%] | -1 | -1 | -1,1 | -1,0 | -1,1 | -1,0 | -1,1 |
| | | | | | | | |
| Zugfestigkeit [N/mm2] | 0,6 | 1,2 | 1,6 | 1,2 | 1,9 | 2,2 | 2,2 |
| Dehnung [%] | 97 | 225 | 248 | 146 | 223 | 223 | 249 |
| Rückprallelastizität [%] | 26 | 27 | 27 | 33 | 20 | 26 | 26 |

## Patentansprüche

1. Verfahren zur Herstellung eines Polyurethanformkörpers mit einer Dichte von 150 bis 350 g/L bei dem man
a) Polyisocyanatprepolymere, erhältlich aus einer Polyisocyanatkomponente (a-1), Polyol (a-2), wobei als Polyol (a-2) ausschließlich Polypropylenoxid mit einem zahlenmittleren Molekulargewicht von 1000 bis 7000 g/mol eingesetzt wird, und Kettenverlängerer (a-3),
b) Polyetherpolyole mit einer mittleren Funktionalität von größer 2,0, hergestellt aus einem oder mehreren Alkylenoxiden unter Zusatz mindestens eines Startermoleküls durch anionische Polymerisation mit Alkalihydroxyden oder kationische Polymerisation mit Lewis-Säuren als Katalysatoren,
c) Polymerpolyetherpolyole,
d) Kettenverlängerer,
e) Katalysatorsystem, enthaltend organische Metallverbindungen auf Basis von Bismut in Kombination mit stark basischen Aminen
f) Treibmittel, enthaltend Wasser, und gegebenenfalls
g) sonstigen Hilfsmittel und/oder Zusatzstoffe
zu einer Reaktionsmischung vermischt und in einer Form zum Polyurethanformkörper aushärtet.

2. Verfahren zur Herstellung eines Polyurethanformkörpers nach Anspruch 1, **dadurch gekennzeichnet, dass** das Polyisocyanatprepolymere a) einen NCO-Gehalt von 8 bis 28 % aufweist.

3. Verfahren zur Herstellung eines Polyurethanformkörpers nach Anspruch 1 oder Anspruch 2, **dadurch gekennzeichnet, dass** der Kettenverlängerer (a-3) Tripropylenglycol enthält.

4. Verfahren zur Herstellung eines Polyurethanformkörpers nach einem der Ansprüche 1 bis 3, **dadurch gekennzeichnet, dass** als Polyetherpolyol b) ausschließlich trifunktional gestartetes Polyetherpolyol eingesetzt wird.

5. Verfahren zur Herstellung eines Polyurethanformkörpers nach einem der Ansprüche 1 bis 4, **dadurch gekennzeichnet, dass** als Kettenverlängerer c) 1,4-Butandiol und/oder Monoethylenglykol eingesetzt werden.

6. Verfahren zur Herstellung eines Polyurethanformkörpers nach Anspruch 5, **dadurch gekennzeichnet, dass** als Kettenverlängerer c) eine Mischung aus 1,4-Butandiol und Monoethylenglykol eingesetzt wird.

7. Polyurethanformkörper, erhältlich nach einem Verfahren gemäß einem der Ansprüche 1 bis 6.

8. Schuhsohle, enthaltend einen Polyurethanformkörper nach Anspruch 7.

## Claims

1. A process for the production of a polyurethane molding having a density of from 150 to 350 g/l, in which
a) polyisocyanate prepolymers, obtainable from a polyisocyanate component (a-1), polyol (a-2), where exclusively polypropylene oxide having a number-average molecular weight of from 1000 to 7000 g/mol is used as polyol (a-2), and chain extender (a-3),
b) polyetherpolyols having an average functionality greater than 2.0, prepared from one or more alkylene oxides with addition of at least one initiator molecule by anionic polymerization with alkali metal hydroxides or cationic polymerization with Lewis acids as catalysts,
c) polymer polyetherpolyols,
d) chain extender,
e) catalyst system, comprising organic metal compounds based on bismuth in combination with strongly basic amines,
f) blowing agent, comprising water, and optionally
g) other assistants and/or additives
are mixed to give a reaction mixture and cured in a mold to give the polyurethane moldings.

2. The process for the production of a polyurethane molding according to claim 1, wherein the polyisocyanate prepolymer a) has an NCO content of from 8 to 28%.

3. The process for the production of a polyurethane molding according to claim 1 or 2, wherein the chain extender (a-3) comprises tripropylene glycol.

4. The process for the production of a polyurethane molding according to any of claims 1 to 3, wherein exclusively trifunctionally initiated polyether polyol is used as polyether polyol b).

5. The process for the production of a polyurethane molding according to any of claims 1 to 4, wherein the 1,4-butanediol and/or monoethylene glycol are used as chain extender c).

6. The process for the production of a polyurethane molding according to claim 5, wherein a mixture of 1,4-butanediol and monoethylene glycol is used as chain extender c).

7. A polyurethane molding obtainable by a process according to any of claims 1 to 6.

8. A shoe sole comprising a polyurethane molding according to claim 7.

## Revendications

1. Procédé de fabrication d'un corps moulé de polyuréthane ayant une densité de 150 à 350 g/l, selon lequel
a) des prépolymères de polyisocyanate, pouvant être obtenus à partir d'un composant polyisocyanate (a-1), d'un polyol (a-2), du polyoxyde de propylène ayant un poids moléculaire moyen en nombre de 1 000 à 7 000 g/mol étant utilisé exclusivement en tant que polyol (a-2), et un allongeur de chaînes (a-3),
b) des polyéther-polyols ayant une fonctionnalité moyenne supérieure à 2,0, fabriqués à partir d'un ou de plusieurs oxydes d'alkylène avec ajout d'au moins une molécule de départ par polymérisation anionique avec des hydroxydes alcalins ou polymérisation cationique avec des acides de Lewis en tant que catalyseurs,
c) des polyéther-polyols polymères,
d) des allongeurs de chaînes,
e) un système catalytique, contenant des composés métalliques organiques à base de bismuth en combinaison avec des amines fortement basiques,
f) des agents gonflants, contenant de l'eau, et éventuellement
g) d'autres adjuvants et/ou additifs,
sont mélangés en un mélange réactionnel et durcis dans un moule en un corps moulé de polyuréthane.

2. Procédé de fabrication d'un corps moulé de polyuréthane selon la revendication 1, **caractérisé en ce que** le prépolymère de polyisocyanate a) présente une teneur en NCO de 8 à 28 %.

3. Procédé de fabrication d'un corps moulé de polyuréthane selon la revendication 1 ou la revendication 2, **caractérisé en ce que** l'allongeur de chaînes (a-3) contient du tripropylène glycol.

4. Procédé de fabrication d'un corps moulé de polyuréthane selon l'une quelconque des revendications 1 à 3, **caractérisé en ce que** du polyéther-polyol démarré trifonctionnellement est utilisé exclusivement en tant que polyéther-polyol b).

5. Procédé de fabrication d'un corps moulé de polyuréthane selon l'une quelconque des revendications 1 à 4, **caractérisé en ce que** du 1,4-butanediol et/ou du monoéthylène glycol sont utilisés en tant qu'allongeur de chaînes c).

6. Procédé de fabrication d'un corps moulé de polyuréthane selon la revendication 5, **caractérisé en ce qu'**un mélange de 1,4-butanediol et de monoéthylène glycol est utilisé en tant qu'allongeur de chaînes c).

7. Corps moulé de polyuréthane, pouvant être obtenu par un procédé selon l'une quelconque des revendications 1 à 6.

8. Semelle de chaussure, contenant un corps moulé de polyuréthane selon la revendication 7.
